# EUROPÄISCHE PATENTSCHRIFT

(11) **EP 0 856 375 B1**
(45) Veröffentlichungstag und Bekanntmachung des Hinweises auf die Patenterteilung: **12.09.2001**
(21) Anmeldenummer: 96119328.1
(22) Anmeldetag: 03.12.1996
(51) Int. Cl.: B23K 35/02, B23K 31/02

(54) **Bauteil mit bereichsweiser Beschichtung und Herstellungsverfahren**
Partially coated workpieces and process for manufacturing same
Pièces revêtues par zones et procédé de fabrication

(43) Veröffentlichungstag der Anmeldung: 05.08.1998
(73) Patentinhaber: MTU Aero Engines GmbH, 80995 München (DE)
(72) Erfinder: Meier, Reinhold, 84405 Dorfen (DE); Schittenhelm, Erhard, 82296 Schöngeising (DE); Thoma, Martin, Dr., 80804 München (DE); Albrecht, Anton, 82346 Andechs/Frieding (DE)
(74) Vertreter: Einsele, Rolf W.

(56) Entgegenhaltungen:
- WO-A-94/11139
- DE-A- 2 115 358
- DE-C- 4 131 871
- GB-A- 2 278 499
- US-A- 3 876 447
- PATENT ABSTRACTS OF JAPAN vol. 013, no. 148 (M-812), 11.April 1989 & JP 63 309389 A (KAWASAKI STEEL CORP), 16.Dezember 1988,

## Beschreibung

Die Erfindung betrifft ein Verfahren zur Herstellung eines Bauteils mit bereichsweiser Beschichtung gemäß dem Oberbegriff des Patentanspruches 1.

Aus der US-A-3 876 447 ist es bekannt, metallische Bauteile bereichsweise mit Hartpartikeln zu beschichten, wobei die Verbindung durch Löten erfolgt. Das metallische Lot wird, wie die Hartstoffe, in Pulverform in eine selbsttragende Folie/Schicht eingebettet, welche aus PTFE-Fasern und einem flüssigen Binder besteht. Die Folie mit Lot und die Folie mit Hartstoffpartikeln werden durch Walzen, d.h. durch Druck, miteinander verbunden. Der Folienverbund wird passend zugeschnitten und auf dem Bauteil fixiert, wobei die Lötfolie unmittelbar auf dem Bauteil aufliegt. Durch die hohe Löttemperatur verdampfen der Binder und der PTFE-Kunststoff, das schmelzende Lot benetzt das Bauteil und die Hartstoffe und schafft die gewünschte, metallische Verbindung. Bei diesem Verfahren dürfte es schwierig sein, eine homogene Partikelverteilung in den Folien zu erzielen bzw. zu kontrollieren. Die Folien bzw. der Folienverbund sind nur bedingt selbsttragend und können leicht beschädigt werden im Sinne von Rissen oder ungewollten Dickenänderungen. Die beim Löten freigesetzten PTFE- und Binder-Dämpfe bzw. -Gase sind darüber hinaus gesundheitsschädlich.

Aus der DE-A-2115 358 ist ein ganz ähnliches Beschichtungsverfahren bekannt mit der Ergänzung, daß die selbsttragende Lötfolie auch blechartig, d.h. durchgehend metallisch ausgeführt sein kann. Siehe hierzu den Anspruch 7 sowie die Figur 7 mit Beschreibung. Die Folie mit den Füllstoffpartikeln besteht aber auch hier aus einem Kunststoffträger mit Binderzusatz sowie den Partikeln. Die Partikelfolie ist auf die Lötfolie durch Walzen bzw. Kleben aufgebracht. Die Nachteile sind weitgehend die selben wie beim vorgenannten US-Patent.

Aufgabe der Erfindung ist es demgegenüber, eine Dünnschicht aus Beschichtungsmaterial in einer alternativen Weise auf eine Lötfolie aufzutragen, um eine zuverlässigere und gleichmäßigere Bauteilbeschichtung zu erzielen.

Gelöst wird diese Aufgabe durch ein gattungsgemäßes Verfahren, bei dem das Auftragen der Dünnschicht aus Beschichtungsmaterial auf die selbsttragende Lötfolie durch galvanisches Abscheiden erfolgt.

Hierdurch wird ein besonders fester und homogener Verbund aus Beschichtungsmaterial und Lötfolie erreicht, dessen Qualität sich auf das bereichsweise beschichtete Bauteil überträgt.

In den Unteransprüchen sind bevorzugte Ausgestaltungen des Verfahrens gekennzeichnet.

Die folgenden Figuren zeigen vergleichend eine bevorzugte Ausführungsform der Erfindung und eine Ausführungsform aus dem Stand der Technik, um die vorliegende Erfindung näher zu erläutern.
- Fig. 1: zeigt ringförmiges ein Bauteil mit einer radial außenliegenden Ringnut nach bereichsweiser Beschichtung einer Innenflanke durch das erfindungsgemäße Verfahren.
- Fig. 2: zeigt ein ringförmiges Bauteil mit einer radial außenliegenden Ringnut nach bereichsweiser Beschichtung einer Innenflanke durch ein bekanntes Verfahren.
- Fig. 3: zeigt eine photographische Vergrößerung im Maßstab 200:1 der bereichsweisen Beschichtung von Fig. 2.
- Fig. 4: zeigt eine photographische Vergrößerung im Maßstab 200:1 der bereichsweisen Beschichtung von Fig. 1.
- Fig. 5: zeigt eine photographische Vergrößerung im Maßstab 2000:1 der bereichsweisen Beschichtung von Fig. 1.

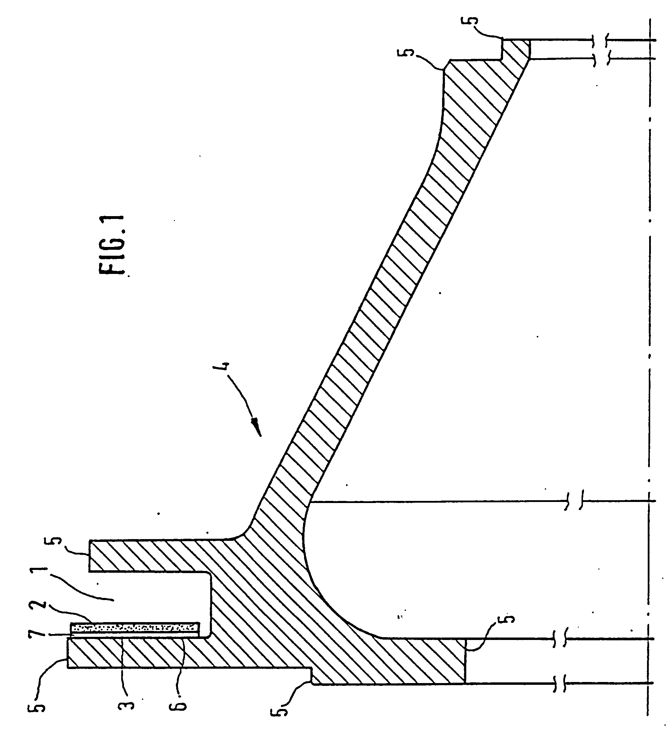

Fig. 1 zeigt ein Bauteil 4 mit einer radial außenliegenden Ringnut 1 nach bereichsweiser Beschichtung 2 einer Innenflanke 3 durch das erfindungsgemäße Verfahren. Die Ringnut 1 ist auf dem Außenumfang des ringförmigen Bauteils 4 angeordnet. Der zu beschichtende Bereich des Bauteils 4 liegt auf einem komplex gestalteten Oberflächenabschnitt mit exponierten Kanten 5 und abgeschirmten oder verdeckten Teilbereichen 6. Die bereichsweise Beschichtung 2 wird durch eine Lotzwischenschicht 7 mit dem zu beschichtenden Bauteilbereich, der Innenflanke 3 in der Ringnut 1, verbunden, wobei Lotzwischenschicht 7 und Beschichtung 2 ohne ein Verbinden mit dem zu beschichtenden Bauteilbereich eine selbsttragende Einheit bilden, die ein zugeschnittenes Teil aus einer gleichförmigen, großflächig beschichteten selbsttragenden Lötfolie ist. Zum Verbinden mit dem Bauteil 4 auf dem zu beschichtenden Bauteilbereich wird die selbsttragende zugeschnittene Einheit auf den zu beschichtenden Bauteilbereich aufgelegt und aufgelötet. In diesem Beispiel wurde eine selbsttragende Hochtemperaturlötfolie verwendet und eine Seite der Lötfolie mit einer verschleißfesten Schicht beschichtet, um die selbsttragende Einheit zu bilden. Die Positionierung und Fixierung der paßgenau zugeschnittenen Einheit auf dem zu beschichtenden Bereich des Bauteils 4 kann durch eine Flußmittelbeschichtung der anderen Seite der Folie erleichtert werden. In diesem Ausführungsbeispiel wird nach dem Positionieren die nur einseitig beschichtete und maßgenau zugeschnittene Lötfolie auf den zu beschichtenden Bauteilbereich geheftet. Da die unterschiedlichsten Beschichtungsverfahren, wie Aufdampfen oder Aufspritzen oder die durch ein elektrisches Feld unterstützten Beschichtungsverfahren wie Aufstäuben oder galvanisches Plattieren auf einer Oberfläche einer selbsttragenden Folie wesentlich gleichmäßigere Beschichtungen in Bezug aufZusammensetzung und Dicke der Beschichtung erzeugen als auf Oberflächenformen von Bauteilen mit exponierten Kanten und abgedeckten oder abgeschirmten Bereichen, weist auch die zugeschnittene Einheit aus selbsttragender Lötfolie mit Beschichtung eine gleichmäßige Dicke auf, so daß der zu beschichtende Bauteilbereich eine gleichmäßig dicke und maßgenaue Beschichtung in gleichmäßiger Zusammensetzung durch das erfindungsgemäße Verfahren erhält. Die Maßgenauigkeit der Dicke wird durch verbesserten Beschichtungsbedingungen erreicht und die Maßgenauigkeit der Ränder des Beschichtungsbereichs auf dem Bauteil durch den gemäß der Erfindung vom Bauteil getrennten Verfahrensschritt des Zuschneidens der beschichteten Lötfolie und durch die erfindungsgemäße Möglichkeit einer genauen Posisionierung und Fixierung der beschichteten Lötfolie auf dem zu beschichtenden Bauteilbereich.

Schließlich zeigt dieses Beispiel deutlich, daß die bisher angewandten Verfahren durch die Notwendigkeit, alle nicht zu beschichtenden Bauteilbereiche mit einer Schutzschicht oder Schutzhülle zu versehen, äußerst kostenintensiv sind, da die vor Beschichtung zu schützende Bauteiloberfläche sehr komplex strukturiert ist und wesentlich größer ist, als der zu beschichtende Bauteilbereich

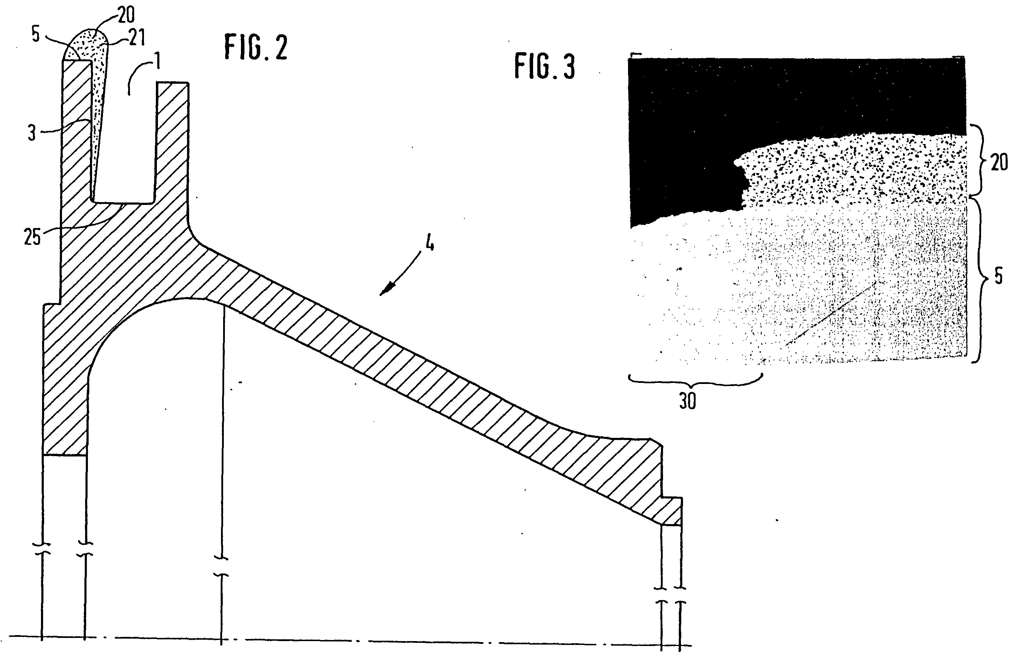

Fig. 2 zeigt ein Bauteil mit einer radial außenliegenden Ringnut 1 nach bereichsweiser Beschichtung 20 einer Innenflanke 3 durch ein bekanntes galvanisches Plattierungsverfahren, bei dem gleichzeitig mit einer metallischen Matrix im Elektrolysebad schwebende Hartstoffpartikel 21 abgeschieden werden. Der zu beschichtende Bauteilbereich ist der gleiche wie in Fig. 1. Deutlich ist zu erkennen, daß von der exponierten Außenkante 5 zum Nutgrund 25 hin die Beschichtungsdicke auf der zu beschichtenden Innenflanke 3 der Ringnut 1 abnimmt. Auch die eingebauten mit abgeschiedenen Hartstoffpartikel, die in diesem Beispiel aus Cr₂O₃ bestehen, und zwischen 20 und 30 Vol.% der Beschichtung ausfüllen, ist nicht gleichmäßig verteilt. An diesem Beispiel wird auch deutlich, daß ein erheblicher Aufwand erforderlich ist, um die nicht zu beschichtenden Oberflächenbereiche eines derartigen Bauteils 4 vor einer Beschichtung zu schützen und nach erfolgter Beschichtung diese Schutzschicht wieder zu entfernen.

Fig. 3 zeigt eine photographische Vergrößerung im Maßstab 200:1 der bereichsweisen Beschichtung 20 von Fig. 2. Deutlich erkennbar ist, daß die Beschichtung teilweise weggebrochen ist und vom beschichteten Bauteil 5 im Bereich 30 abgeplatzt ist. Dieses liegt einerseits an der extrem ungleichmäßigen Beschichtungsdicke und Beschichtungszusammensetzung, was Materialspannungen in der Beschichtung verursacht und Rißbildungen begünstigt, und zum anderen an dem äußerst spröden Schichtwerkstoff, der zur Erhöhung der Verschleißfestigkeit in diesem Beispiel eingesetzt wird. Eine Nachbearbeitung der völlig ungleichmäßig aufgebrachten Beschichtung, um die Schichtdicke zu vergleichmäßigen, ist deshalb äußerst schwierig.

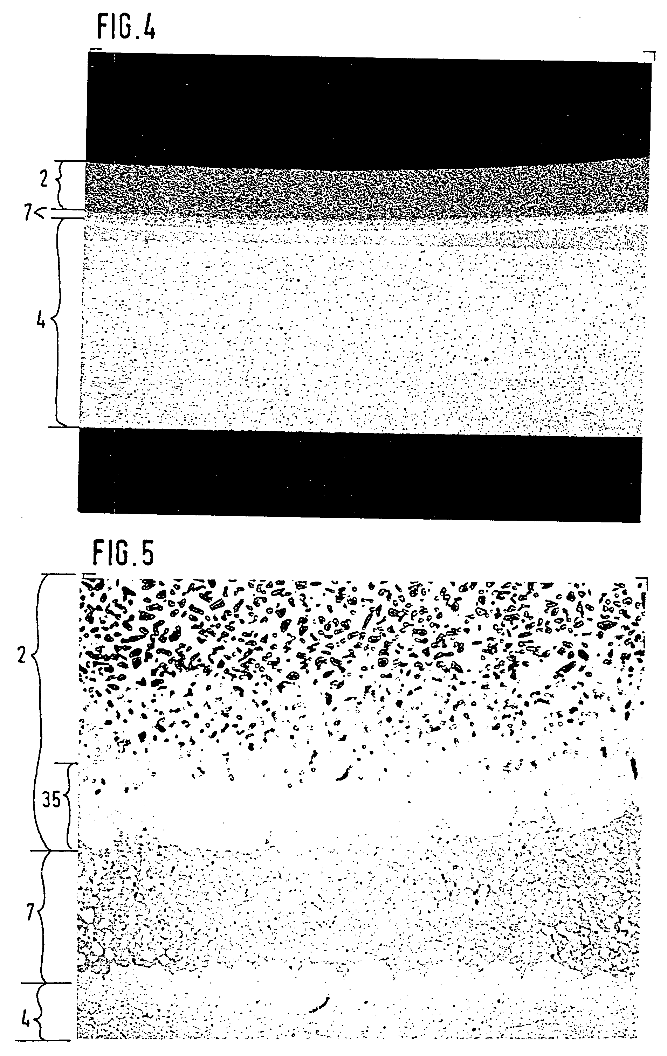

Fig. 4 zeigt eine photographische Vergrößerung im Maßstab 200:1 der bereichsweisen Beschichtung 2 von Fig. 1. Deutlich ist zu erkennen, daß die Beschichtungsdicke gleichmäßig ist. Von der selbsttragenden Lötfolie ist nur noch eine dünne Lotzwischenschicht 7 zu erkennen. Mit Fig. 5 wird eine photographische Vergrößerung im Maßstab 2000:1 der bereichsweisen Beschichtung von Fig. 1 gezeigt, wobei insbesondere der Grenzbereich zwischen Bauteil 4 Lotzwischenschicht 7 und verschleißfester Beschichtung 2 ausschnittsweise gezeigt wird. Zwischen Lotzwischenschicht 7 und Beschichtung 2 hat sich eine Grenzschicht 35 ausgebildet, die im wesentlichen aus dem Matrixmaterial der Beschichtung und Lotlegierungskomponenten besteht und einen Übergang vom elastischen Werkstoff des Bauteils 4 mit hohem thermischen Ausdehnungskoeffizienten über die duktile Lotzwischenschicht zur spröden verschleißfesten Beschichtung mit geringerem thermischen Ausdehnungskoeffizienten bildet . Außerdem ist deutlich erkennbar, daß die Lotzwischenschicht sowohl mit dem Substrat als auch der Beschichtung verzahnt ist, was die Haftung und Haltbarkeit der Beschichtung auf dem Substrat gegenüber einer direkten bereichsweisen Beschichtung, wie sie in Fig. 2 und 3 gezeigt wird, erheblich verbessert.

## Patentansprüche

1. Verfahren zur Herstellung eines Bauteils (4) mit bereichsweiser Beschichtung, mit folgenden Verfahrensschritten
a) Auftragen einer Dünnschicht aus Beschichtungsmaterial auf eine selbsttragende Lötfolie,
b) Zuschneiden der beschichteten Lötfolie,
c) Positionieren und Fixieren der beschichteten Lötfolie auf dem zu beschichtenden Bauteilbereich,
d) Aufheizen des Bauteils (4) im Bereich der Lötfolie auf Löttemperatur mit nachfolgender Abkühlung, so daß die Dünnschicht die bereichsweise Beschichtung (2) mit einer Lotzwischenschicht (7) auf dem Bauteil (4) bildet und den Bereich (6) des Bauteils (4) bedeckt und schützt, **dadurch gekennzeichnet,**
daß das Auftragen der Dünnschicht aus Beschichtungsmaterial auf die selbsttragende Lötfolie durch galvanisches Abscheiden erfolgt.

2. Verfahren nach Anspruch 1, **dadurch gekennzeichnet, daß** als Dünnschicht ein verschleißfester Werkstoff auf die Lötfolie aufgetragen wird.

3. Verfahren nach einem der Ansprüche 1 oder 2, **dadurch gekennzeichnet, daß** als Dünnschicht ein wärmedämmender Werkstoff auf die Lötfolie aufgetragen wird.

4. Verfahren nach einem der Ansprüche 1 oder 2, **dadurch gekennzeichnet, daß** als Dünnschicht ein heißgaskorrosionsfester Werkstoff auf die Lötfolie aufgetragen wird.

5. Verfahren nach einem der Ansprüche 1 oder 2, **dadurch gekennzeichnet, daß** als Dünnschicht ein reibkorrosionsfester Werkstoff auf die Lötfolie aufgetragen wird.

6. Verfahren nach einem der Ansprüche 1 bis 5, **dadurch gekennzeichnet, daß** als Dünnschicht ein Kobaltbasiswerkstoff mit eingelagerten Partikeln aus Cr₂O₃ auf die Lötfolie aufgetragen wird.

7. Verfahren nach einem der Ansprüche 1 bis 6, **dadurch gekennzeichnet, daß** das Zuschneiden der beschichteten Lötfolie mittels Laser erfolgt.

8. Verwendung des Verfahrens nach einem der Ansprüche 1 bis 7 zur Erhöhung der Lebensdauer von Bauteilen (4) im Triebwerksbau.

## Claims

1. A process for the manufacture of a component (4) which is coated in certain areas with the following process stages:
a) application of a thin layer of a coating material onto a self-supporting solder film,
b) cutting to size of the coated solder film,
c) positioning and fixing of the coated solder film on the area of the component to be coated,
d) heating of the component (4) in the area of the solder film to soldering temperature followed by cooling in such a manner that the thin layer forms the coating (2) in the given areas on the component (4) with an intermediate solder layer (7) and covers and protects the area (6) of the component (4),
**characterised in that**
the application of the thin layer of coating material on the self-supporting solder film is achieved by means of electrodeposition.

2. A process in accordance with Claim 1, **characterised in that** a wear-resistant material is applied to the solder film as the thin layer.

3. A process in accordance with Claim 1 or 2, **characterised in that** a heat-insulating material is applied to the solder film as the thin layer.

4. A process in accordance with Claim 1 or 2, **characterised in that** a hot gas corrosion-resistant material is applied to the solder film as the thin layer.

5. A process in accordance with Claim 1 or 2, **characterised in that** a hot friction corrosion-resistant material is applied to the solder film as the thin layer.

6. A process in accordance with one of Claims 1 to 5, **characterised in that** a cobalt-based material with embedded particles of Cr₂O₃ is applied to the solder film as the thin layer.

7. A process in accordance with one of Claims 1 to 6, **characterised in that** the coated solder film is cut to size by laser.

8. The use of the process in accordance with one of Claims 1 to 7 to increase the useful life of components (4) used in engine construction.

## Revendications

1. Procédé de fabrication d'un composant (4) muni d'un revêtement appliqué par zones, comportant les étapes de procédé suivantes :
a) application d'une couche mince en un matériau de revêtement sur une feuille de brasure autoporteuse,
b) découpage de la feuille de brasure revêtue,
c) positionnement et fixation de la feuille de brasure revêtue sur la zone de composant à revêtir,
d) chauffage à la température de brasage du composant (4) dans la zone de la feuille de brasure, avec refroidissement subséquent, de sorte que la couche mince forme le revêtement (2) appliqué par zones avec une couche de brasure intermédiaire (7) sur le composant (4) et couvre et protège la zone (6) du composant (4), **caractérisé en ce que**, l'application de la couche mince s'effectue à partir d'un matériau de revêtement sur la feuille de brasure autoporteuse, par un processus de déposition galvanique.

2. Procédé selon la revendication 1, **caractérisé en ce qu'**on applique sur la feuille de brasure comme couche mince un matériau résistant à l'usure.

3. Procédé selon l'une des revendications 1 ou 2, **caractérisé en ce qu'**on applique sur la feuille de brasure comme couche mince un matériau isolant de la chaleur.

4. Procédé selon l'une des revendications 1 ou 2, **caractérisé en ce qu'**on applique sur la feuille de brasure comme couche mince un matériau résistant à la corrosion par les gaz chauds.

5. Procédé selon l'une des revendications 1 ou 2, **caractérisé en ce qu'**on applique sur la feuille de brasure comme couche mince un matériau résistant à la corrosion par frottement.

6. Procédé selon l'une des revendications 1 à 5, **caractérisé en ce qu'**on applique sur la feuille de brasure comme couche mince un matériau à base de cobalt, dans lequel sont insérées des particules en Cr₂O₃.

7. Procédé selon l'une des revendications 1 à 6, **caractérisé en ce que** le découpage de la feuille de brasure revêtue se fait en utilisant un laser.

8. Utilisation du procédé selon l'une des revendications 1 à 7, pour augmenter la durée de vie de composants (4) dans la construction de propulseurs.
